# EUROPEAN PATENT APPLICATION

(11) **EP 2 127 726 A1**
(43) Date of publication of application: **02.12.2009**
(21) Application number: 08157172.1
(22) Date of filing: 29.05.2008
(51) Int. Cl.: B01D 53/14, B01J 20/34, F24J 2/04

(54) **Method of regenerating a loaded sorbent using concentrated solar power and an apparatus therefor**

(71) Applicant: Shell Internationale Research Maatschappij B.V., 2596 HR Den Haag (NL)
(72) Inventor: Groothuis, Casper Krijno, 2596 HR The Hague (NL); Tanaeva, Irina, 2596 HR The hague (NL)
(74) Representative: Zeestraten, Albertus W. J.

(57) **Abstract**

The present invention provides a method of, and an apparatus for regenerating a loaded sorbent using concentrated solar power, the method comprising at least the steps of:
(a) providing a loaded sorbent (200, 206, 228) comprising a sorbent and one or more absorbate components;
(b) providing a concentrated solar power system (10);
(c) collecting solar energy from the sun in the concentrated solar power system to provide captured solar thermal energy; and
(d) using at least a part of the captured solar thermal energy to heat the loaded sorbent (200, 206, 228) to provide a sorbent component (52, 210) and one or more absorbate component streams (242).

## Description

The present invention provides a method of, and apparatus for, regenerating a loaded sorbent using Concentrated Solar Power (CSP). The sorbent regenerated using CSP may be a solid entrapping a liquid or gas, such as a zeolite or metal oxide framework (MOF) entrapping water, or a liquid carrying a dissolved gas, such as a solvent comprising dissolved carbon dioxide produced by acid gas removal in the production of Liquefied Natural Gas (LNG).

Natural gas is a useful fuel source, as well as being a source of various hydrocarbon compounds. It is often desirable to liquefy natural gas in a liquefied natural gas (LNG) plant at or near the source of a natural gas stream for a number of reasons. As an example, natural gas can be stored and transported over long distances more readily as a liquid than in gaseous form because it occupies a small volume and does not need to be stored at high pressure.

Usually, natural gas, comprising predominantly methane, enters an LNG plant at elevated pressures and is pre-treated to produce a purified feed stream suitable for liquefaction at cryogenic temperatures. The purified gas is processed through a plurality of cooling stages using heat exchangers to progressively reduce its temperature until liquefaction is achieved. The liquid natural gas is then further cooled and expanded to final atmospheric pressure suitable for storage and transportation.

In addition to methane, natural gas usually includes some heavier hydrocarbons and impurities, including but not limited to carbon dioxide, sulphur, hydrogen sulphide and other sulphur compounds, nitrogen, helium, water and other non-hydrocarbon acid gases, ethane, propane, butanes, C₅+ hydrocarbons and aromatic hydrocarbons. These and any other common or known heavier hydrocarbons and impurities either prevent or hinder the usual known methods of liquefying the methane, especially the most efficient methods of liquefying methane. Most if not all known or proposed methods of liquefying hydrocarbons, especially liquefying natural gas, are based on reducing as far as possible the levels of at least most of the heavier hydrocarbons and impurities prior to the liquefying process.

Hydrocarbons heavier than methane and usually ethane are typically condensed and recovered as natural gas liquids (NGLs) from a natural gas stream. The NGLs are usually fractionated to yield valuable hydrocarbon products, either as products steams per se or for use in liquefaction, for example as a component of a refrigerant.

Meanwhile, methane recovered from the NGL recovery is usually recompressed for use or reuse either in the liquefaction, such as a fuel gas, or being recombined with the main methane stream being liquefied, or it can be provided as a separate stream.

Acid gasses such as carbon dioxide and sulphur compounds, hydrogen sulphide and other sulphur compounds, such as the oxides of sulphur, are normally removed from the natural gas by an initial acid gas treatment step, in which the natural gas stream is exposed to a solvent, which reacts with the acid gasses to dissolve them and extract them from the stream. The solvent extraction reaction is reversible, allowing the solvent to be regenerated by heating.

The utility of the extraction of acid gasses is not limited to the treatment of a natural gas stream. Similar processes can be used to remove acid gasses contained in a flue gas stream, such as the flue gas from the combustion of hydrocarbon fuels in gas turbines and boilers commonly used in LNG and power plants. The current cost of flue gas CO₂ capture only, excluding transportation and storage is estimated around $ 60/tonne CO₂. This makes flue gas capture uneconomic and prohibitive for most current and planned plants.

However, acid gas treatment is increasing in importance as the impact on climate change of the rising concentration of greenhouse gasses, such as carbon dioxide, in the atmosphere is understood. Solvent extraction provides one way of capturing carbon dioxide from a gaseous stream to prevent its release into the atmosphere.

For instance, US Patent No. 6,782,714 discloses an LNG plant including a carbon dioxide recovery apparatus for natural gas. The sorbent, which can be an amine solution, is used to absorb and remove carbon dioxide and hydrogen sulphide. The amine solution containing the absorbed carbon dioxide is heated in a regeneration tower to release the carbon dioxide and regenerate the sorbent solution. The heat for the regeneration process is supplied by low pressure steam from a steam turbine. The low pressure steam is generated in a boiler by burning fuel, such as natural gas.

A disadvantage of the solvent extraction process is the energy required to regeneration the sorbent, and release the acid gas, such as carbon dioxide. For instance, the solvent extraction of carbon dioxide using an aqueous amine solution as the solvent, requires 1.0 to 2.0 MJ per kg of CO₂ to regenerate the solvent.

In order to regenerate the loaded sorbent, boilers are conventionally used to provide the heat required, normally in the form of steam. The boilers operate by combusting a hydrocarbon fuel and normally generate steam from the heat of the reaction. The burning of the hydrocarbon fuel required by the boilers generates additional carbon dioxide, which should also be removed from the flue gas stream of the boiler. This in turn requires the acid gas treatment of the boiler flue gas stream, utilising additional solvent, which must also be regenerated by heating, using yet more hydrocarbon fuel and generating additional carbon dioxide, increasing the financial costs of the acid gas treatment to isolate and capture the carbon dioxide.

The method and apparatus of the present invention addresses the problem of the prohibitive energy requirements of acid gas loaded solvent regeneration by utilising Concentrated Solar Power (CSP) to provide the thermal energy required to separate the acid gas absorbate from the solvent sorbent. CSP thermal energy production does not result in the generation of carbon dioxide. The present invention is therefore assists in the provision of a zero-emissions CO₂ plant.

In a first aspect, the present invention provides a method of regenerating a loaded sorbent to provide a sorbent component and an absorbate component, said method comprising at least the steps of:
(a) providing a loaded sorbent comprising a sorbent and one or more absorbate components;
(b) providing a concentrated solar power system;
(c) collecting solar energy from the sun in the concentrated solar power system to provide captured solar thermal energy; and
(d) using at least a part of the captured solar thermal energy to heat the loaded sorbent to provide a sorbent component and one or more absorbate component streams.

In a further aspect, the present invention provides an apparatus for regenerating a loaded sorbent to provide a sorbent component and an absorbate component, said apparatus comprising at least:
a concentrated solar power system comprising: one or more concentrators to reflect and concentrate sunlight onto one or more receivers and one or more receivers to capture solar thermal energy in a first thermal transfer fluid stream to provide a heated first thermal transfer fluid stream; and
a sorbent heat exchanger to generate a sorbent component and an absorbate component stream using at least part of the captured solar thermal energy.

By using CSP to help to regenerate the loaded sorbent, the quantities of hydrocarbon fuel which must be burned in a boiler to provide steam to heat the loaded sorbent can be reduced, and in some cases the boilers can be dispensed with entirely. By supplementing the heat of combustion in a boiler with captured solar thermal energy, hydrocarbon fuel costs can be reduced, and the carbon dioxide emissions associated with the manufacturing plant lowered.

In addition, the method and apparatus described herein can provide peak shaving of the fuel requirements of a plant. During daylight hours, the thermal energy provided by the CSP system can be used to supplement, and in some instances entirely replace the heat generated by boilers or from the flue gas of gas turbines conventionally used to regenerate the loaded sorbent.

Such a method and apparatus can be used to regenerate solid sorbents such as zeolites and metal oxide frameworks, and liquid sorbents such as those used in the solvent extraction of acid gases including, but not limited to carbon dioxide, oxides of sulphur and hydrogen sulphide. The sorbents can be used in the removal of acid gases from a hydrocarbon stream, such as a natural gas stream for a LNG plant, or a flue gas stream.

As used herein, the term "sorbent" means any solid or liquid substance which can reversibly absorb, adsorb and/or capture one or more substances, the latter called "absorbates". The term "absorbate" as used herein refers to the solid, liquid or gaseous substance absorbed, adsorbed and/or captured by the sorbent. The term "loaded sorbent" is used herein to describe the absorbate-containing sorbent, and is synonymous with the terms "rich sorbent" and "fat sorbent". The term "loaded sorbent" encompasses both partially- and fully-loaded sorbents.

Embodiments and examples of the present invention will now be described by way of example only with reference to the accompanying drawings.

Figure 1 is a diagrammatic scheme for a first apparatus and method of regenerating a loaded sorbent using Concentrated Solar Power.

Figure 2 is a diagrammatic scheme for a second apparatus and method of regenerating a loaded sorbent using CSP.

Figure 3 is a diagrammatic scheme for a third apparatus and method of regenerating a loaded sorbent using CSP.

For the purpose of this description, a single reference number will be assigned to a line as well as a stream carried in that line.

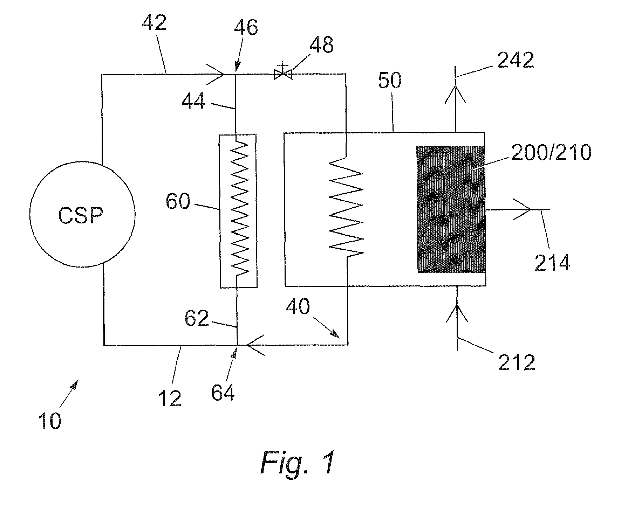

Figure 1 is a diagrammatic scheme for an apparatus and method of regenerating a loaded sorbent according to a first embodiment. A CSP system 10 is shown which comprises one or more first thermal transfer fluid streams 12 in a first thermal transfer fluid circuit 40 which captures solar thermal energy to heat the one or more first thermal transfer fluid streams 12 to provide one or more heated first thermal transfer fluid streams 42. For simplicity, only a single first thermal transfer fluid stream 12 and heated first thermal transfer fluid stream 42 is shown in Figure 1 and these streams will be referred to in the singular for the discussion of Figure 1. However, the method and apparatus disclosed herein encompasses the use of a plurality of thermal transfer fluid streams and heated first thermal transfer fluid streams.

The CSP system 10 concentrates and collects direct solar radiation to provide medium to high temperature heat. A CSP system may contain three main elements: one or more concentrators, one or more receivers and one or more first thermal transfer fluid circuits. The one or more concentrators reflect and concentrate light from the sun onto the one or more receivers. The one or more receivers receive the reflected and concentrated sunlight and heat the first thermal transfer fluid in the first thermal transfer fluid circuit 40. In Figure 1, the one or more concentrators and one or more receivers are represented by the unit CSP.

Parabolic trough CSP systems use trough-shaped mirrors as the concentrators to reflect and concentrate sunlight onto one or more receivers in the form of tubes. A first thermal transfer fluid 40 can be heated in the receiver tubes to about 500 °C. The heated first thermal transfer fluid 42can be heat exchanged against the loaded sorbent directly. For example, direct solar steam can be generated at a pressure of 100 bar and a temperature of about 375 °C. Alternatively, the heated first thermal transfer fluid 42 can be heat exchanged with a second or further thermal transfer fluid (not shown) which can then be used to regenerate the loaded sorbent.

As an alternative to parabolic trough concentrators, a linear Fresnel reflector array of concentrators can be used. This is a line focus system similar to parabolic trough systems in which solar radiation is concentrated on an elevated inverted linear receiver using an array of nearly flat reflectors. The receiver contains the first thermal transfer fluid stream 12 which is heated to provide the heated first thermal transfer fluid stream. The use of linear concentrators provides a lower-cost alternative to parabolic trough concentrators and provides a number of advantages over parabolic systems such as lower structural support and concentrator costs, fixed fluid joints, a receiver separated from the concentrators and long focal lengths allowing the use of conventional glass.

Central receiver (solar tower) CSP systems use a circular array of large individually tracking plain mirrors (heliostats) as the one or more concentrators to concentrate sunlight onto a central receiver mounted on top of a tower. The first thermal transfer fluid stream 12 is passed to the central receiver where it is heated to provide the heated first thermal transfer fluid stream 42. Such systems can provide high conversion efficiencies. If pressurised gas or air is used as the thermal transfer fluid, temperatures of about 1000 °C or more may be achieved. In a similar manner to the parabolic trough CSP systems, the solar thermal energy can be captured directly in the first thermal transfer fluid or used to heat a second or further thermal transfer fluid, which can be subsequently heat exchanged against the loaded sorbent to release the absorbate and regenerate the sorbent.

Parabolic dish CSP systems are smaller units which use dish shaped concentrators to reflect and concentrate sunlight into a receiver situated at the focal point of the dish. The concentrated radiation is absorbed into the receiver and can heat the first thermal transfer fluid to temperatures of about 750 °C.

Returning to Figure 1, the CSP system 10 collects light from the sun and captures this solar thermal energy by heating the first thermal transfer fluid stream 12 to provide a heated first thermal transfer fluid stream 42. The first thermal transfer fluid is preferably selected from the group comprising: H₂O, liquid sodium, molten salt, natural or synthetic oil and air, and more preferably comprises H₂O. A heated first thermal transfer fluid such as steam may have a pressure of 100 bar and a temperature of about 375 °C.

The heated first thermal transfer fluid stream 42 is passed to a sorbent heat exchanger 50 where it heats a loaded sorbent 200 to regenerate the sorbent component 210. In the example of Figure 1, a sorbent heat exchanger 50 for a solid sorbent component 210 is shown. The solid sorbent component 210 is preferably selected from the group comprising zeolites and metal oxide frameworks. The absorbate component may be a liquid such as water or an organic solvent.

When it is required to regenerate the loaded sorbent 200, first valve 48 is opened allowing the heated first thermal transfer stream 42 to flow through the sorbent heat exchanger 50. The heated first thermal transfer stream 42 heats the loaded sorbent 200 to a temperature sufficient to release the captured absorbate. The released absorbate exits the sorbent heat exchanger 50 as absorbate component stream 242. Once the absorbate has been removed to regenerate the sorbent 210, first valve 48 can be closed and the operation of the sorbent component 210 to capture the one or more absorbate components resumed.

Operation of the sorbent 210 to capture the one or more absorbate components may be carried out in the sorbent heat exchanger 50, or in another process vessel. Operation of the sorbent 210 in the sorbent heat exchanger 50 is preferred, as this does not require the removal of the loaded sorbent from a separate absorbate extraction vessel and transfer of the loaded sorbent to the sorbent heat exchanger 50 for regeneration.

In operation, a process stream 212 comprising one or more absorbate components is provided to the sorbent heat exchanger 50, which is operating as an absorbate extraction vessel. The process stream flows through the solid sorbent 210, such as a packed bed of zeolite or MOF sorbent, and the one or more absorbate components are captured by the sorbent 210 to provide a treated process stream 214. The treated process stream 214 is diminished in absorbate component content compared to process stream 212.

A thermal storage system 60 can be provided in the first thermal transfer fluid circuit 40 to store captured thermal energy at those times when the heated first thermal transfer fluid 42 is not required to regenerate the loaded sorbent 200. During the daytime when the CSP system 10 can capture solar thermal energy to produce heated first thermal transfer fluid stream 42, a portion of the heated first thermal transfer fluid stream 42 may be passed to thermal storage system 60 via first junction 46, which can be a first shunt valve, along heated first thermal transfer fluid storage stream 44. Thermal storage unit 60 functions as a heat exchanger to remove and store heat from the heated first thermal transfer fluid storage stream 44 to provide a first thermal transfer fluid storage stream 62, which is returned to first thermal transfer fluid stream 12 via second junction 64, which can be a second shunt valve.

When the stored heat in the thermal storage system 60 is required by the CSP system 10, for instance at night when the CSP system 10 cannot capture solar thermal energy to produce a flow of heated first thermal transfer fluid stream 42, or during cloudy daylight periods when the intensity of the sunlight is reduced, second junction 64 can direct a part of first thermal transfer fluid stream 12 to the thermal storage system 60 along first thermal transfer fluid storage stream 62. First thermal transfer fluid storage stream 62 is heated in the thermal storage system 60 to provide heated first thermal transfer fluid storage stream 44, which can returned to heated first thermal transfer fluid stream 42 via first junction 46. The heated first thermal transfer fluid stream 42 can then be heat exchanged with the loaded sorbent 200 in the sorbent heat exchanger 50. In this way, the thermal storage system 60 can release captured solar thermal energy to regenerate a loaded sorbent 200 even when there is insufficient sunlight available to CSP system 10.

The thermal storage system 60 may be a molten-salt storage system. Inside the thermal storage system 60 the thermal energy from the heated first thermal transfer fluid storage stream 44 can be passed to a cold salt stream from a cold salt storage tank to generate a hot salt stream. The hot salt stream is passed to a hot salt storage tank where it can be stored until the thermal energy of the hot salt is required. For example, a sixteen hour molten-salt storage system can allow CSP systems to be run on a 24 hour basis in Summertime when there is sufficient daytime sunlight to provide a store of captured thermal energy.

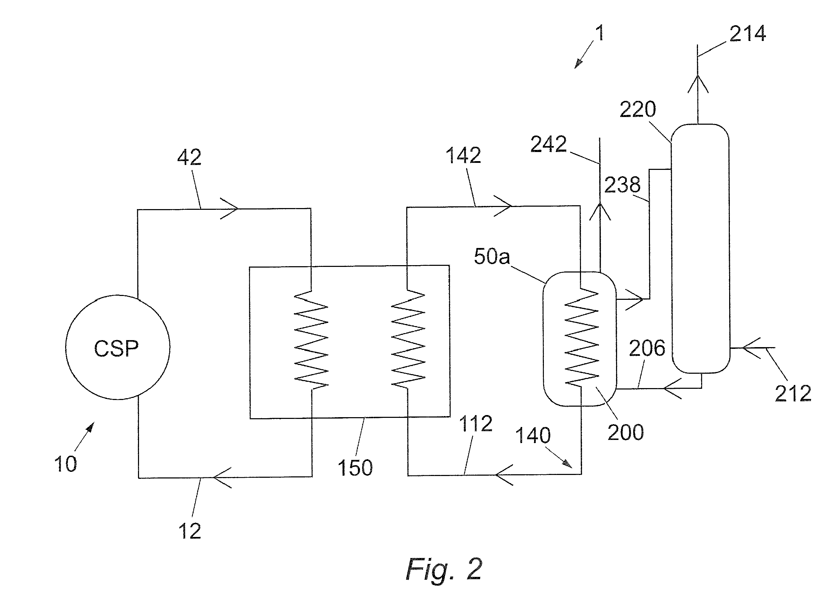

Figure 2 is a diagrammatic scheme for an apparatus and method of regenerating a loaded sorbent according to a second embodiment. The embodiment of Figure 2 shows a liquid sorbent system. In this embodiment, a second thermal transfer fluid circuit 140, which is a different circuit from the first thermal transfer fluid circuit 40 which first receives the captured solar thermal energy, provides the heat to regenerate the loaded sorbent 200.

In particular, the second thermal transfer circuit 140 comprises one or more second thermal transfer fluid streams 112 which are provided with the captured solar thermal energy by heat exchange with the one or more heated first thermal transfer fluid streams 42 in a first heat exchanger 150. The second thermal transfer fluid stream 112 can be the same or different from the first thermal transfer fluid stream, and selected from the group comprising: H₂O, liquid sodium, molten salt, natural or synthetic oil and air. H₂O is a preferred second thermal transfer fluid.

As discussed in relation to Figure 1, the CSP system can additionally comprise one or more concentrators and one or more receivers, and may be of the parabolic trough, linear Fresnel reflector array, central receiver or parabolic dish types.

The heated first thermal transfer fluid steam 42 is passed to a first heat exchanger 150, where it is heat exchanged against the second thermal transfer fluid stream 112 to provide the first thermal transfer fluid stream 12 in the first thermal transfer fluid circuit 40 and a heated second thermal transfer fluid stream 142 in the second thermal transfer fluid circuit 140. The first heat exchanger 150 can be any heat exchanger known in the art, such as a plate and fin heat exchanger or a shell and tube heat exchanger. Shell and tube heat exchangers, and more particularly kettle heat exchangers are preferred. Although only a single first heat exchanger 150 is shown in Figure 2, the method and apparatus disclosed herein encompasses the possibility of a plurality of heat exchangers, in series and/or in parallel.

In a further embodiment not shown in Figure 2, the captured solar thermal energy may be transferred between one of more further thermal transfer circuits, prior to the regeneration of the loaded sorbent 200. Each further thermal transfer circuit may comprise further heat exchangers, further thermal transfer fluid streams and heated further thermal transfer fluid streams.

For instance, where a third thermal transfer circuit is present, the heated second thermal transfer fluid stream 142 would be heat exchanged against a third thermal transfer fluid in a second heat exchanger to provide the second thermal transfer fluid stream 112 in the second thermal transfer fluid circuit 140 and a heated third thermal transfer fluid in a third thermal transfer fluid circuit. The heated third thermal transfer fluid stream could then be heat exchanged with the loaded sorbent 200 in the sorbent heat exchanger to regenerate the sorbent. The third and further thermal transfer fluids may be the same or different to the first or second thermal transfer fluids.

Returning to Figure 2, the heated second thermal transfer fluid stream 142, which may be a steam stream, is passed to the sorbent heat exchanger 50a where it is heat exchanged against loaded sorbent 200 to regenerate the loaded sorbent 200 to provide a (regenerated) sorbent stream 238, an absorbate component stream 242 and second thermal transfer fluid stream 112.

The loaded sorbent 200 is produced in solvent extraction reactor 220, such as an absorber tower. Process stream 212 comprising one or more absorbate components is passed to the solvent extraction reactor 220 where it is intimately contacted with liquid sorbent, thereby allowing the liquid sorbent to extract the one or more absorbate components from the process stream 212.

In one preferred aspect, the one or more absorbate components comprise carbon dioxide. A number of chemical solvents are useful as the sorbent such as primary, secondary and/or tertiary amines derived from alkanolamines, especially amines are derived from ethanolamine, especially monoethanolamine (MEA), diethanolamine (DEA), triethanolamine (TEA), diisopropanolamine (DIPA) and methyldiethanolamine (MDEA) or mixtures thereof; diglycolamines and sterically hindered amines.

For example, the carbon dioxide can be captured in the solvent extraction reactor 220 by an acid-base reaction to yield a soluble carbonate salt according to the reactions:

2RNH₂ + CO₂ → RNH₃⁺ + RNH-CO₂⁻

and/or

RNH₂ + CO₂ +H₂O → RNH₃⁺ + HCO₃⁻

These solvent extraction reactions are reversible, allowing the aqueous amine solvent to be regenerated by heating in the sorbent heat exchanger 50a.

Preferred sterically hindered amines can be a metal sulphonate, metal phosphonate, metal phosphate, metal sulfamate, metal phosphoramidate or metal carboxylate of at least one hindered secondary or tertiary amine, wherein the metal sulphonate, phosphonate, phosphate, sulfamate or phosphoramidate is attached to the amine nitrogen through a group containing at least one chain carbon, and the metal carboxylate is attached to the amine nitrogen through an alkylene group containing two or more chain carbons. Such sterically hindered amines are disclosed WO 2007/021531.

The sorbents discussed can be present as a liquid sorbent mixture in which the sorbent is dissolved in a solvent or mixed with a liquid, the solvent selected from water or a physical solvent or mixtures thereof.

Physical solvents which are suitable in the method described herein are cyclo-tetramethylenesulfone and its derivatives, aliphatic acid amides, N-methylpyrrolidone, N-alkylated pyrrolidones and the corresponding piperidones, methanol, ethanol and mixtures of dialkylethers of polyethylene glycols or mixtures thereof.

When the process stream 212 is a flue gas stream, the sorbent may preferably comprise one or more amines selected from the group: monoethanolamine (MEA), diethanolamine (DEA), diglycolamine (DGA), methyldiethanolamine (MDEA), triethanolamine (TEA), N,N'-di(hydroxyalkyl)piperazine, N,N,N',N'-tetrakis(hydroxylalkyl)-1,6-hexanediamine and tertiary alkylamine sulfonic acid compound.

MEA is an especially preferred amine, due to its ability to absorb a relatively high percentage of CO₂ (volume CO₂ per volume MEA). Thus, a sorbent comprising MEA is suitable to remove CO₂ from gases having low concentrations of CO₂, typically 3 to 10% (v/v) of CO₂. Preferably, the N,N'-di(hydroxyalkyl)piperazine is N,N'-d-(2-hydroxyethyl)piperazine and/or N,N'-di-(3-hydroxypropyl)piperazine. Preferably, the tetrakis-(hydroxyalkyl)-1,6-hexanediamine is N,N,N',N'-tetrakis(2-hydroxyethyl)-1,6-hexanediamine and/or N,N,N',N'-tetrakis(2-hydroxypropyl)-1,6-hexanediamine. Preferably, the tertiary alkylamine sulfonic compounds are selected from the group of 4-(2-hydroxyethyl)-1-piperazine-ethanesulfonic acid, 4-(2-hydroxyethyl)-1-piperazine-propanesulfonic acid, 4-(2-hydroxyethyl)piperazine-1-(2-hydroxypropanesulfonic acid) and 1,4-piperazinedi-(sulfonic acid).

An especially preferred sorbent comprises mixtures of a primary or secondary amine with a tertiary or a sterically hindered amine. Suitable tertiary or sterically hindered amines have been described hereinabove. The primary or secondary amine compound suitably has a pKb (at 25 °C in water) below 5.5, preferably below 5, more preferably below 4.5. A lower pKb results in improved process results in the form of increased CO₂ absorption. An especially preferred secondary amine is piperazine.

In the event that the process stream 212 comprises an appreciable quantity of oxygen, suitably in the range of from 1 to 20% (v/v) of oxygen, preferably a corrosion inhibitor is added to the absorbing liquid. Suitable corrosion inhibitors are described for example in US Patent No. 6,036,888. It will be understood that the conditions used for the removal of the absorbate depend inter alia on the type of sorbent used. In the event that the sorbent comprises an amine, the absorbate removal in solvent extraction reactor 220 is suitably carried out at a temperature between 15 and 90 °C, preferably at a temperature of at least 20 °C, more preferably between 25 and 80 °C, still more preferably between 40 and 65 °C, and even still more preferably at about 55 °C. In the event that the absorbing liquid comprises ammonia, suitably the absorbate removal is performed at temperatures below ambient temperature, preferably in the range of from 0 to 10 °C, more preferably from 2 to 8 °C.

Returning to Figure 2, the loaded sorbent 200 is removed from at or near the bottom of the solvent extraction reactor 220 and passed to sorbent heat exchanger 50a as loaded sorbent stream 206 where it is heated to release the absorbate component and regenerate the sorbent. The sorbent regeneration temperature is preferably between 100 and 200 °C, more preferably between 120 and 180 °C. The regenerated sorbent is returned to the solvent extraction reactor 220 as sorbent stream 238. In this way a continuous absorbate component extraction and sorbent regeneration proves is provided.

Treated process stream 214, which contains a diminished absorbate component content compared to process stream 212 is withdrawn from solvent extraction reactor 220. If process stream 212 is a natural gas stream, then treated process stream 214 can be passed to one or more further treatment units, for instance for the optional removal of natural gas liquids, and subsequent liquefaction to provide LNG. If process stream 212 is a flue gas, for instance from a boiler or gas turbine, then treated process stream 214 can be vented to the atmosphere.

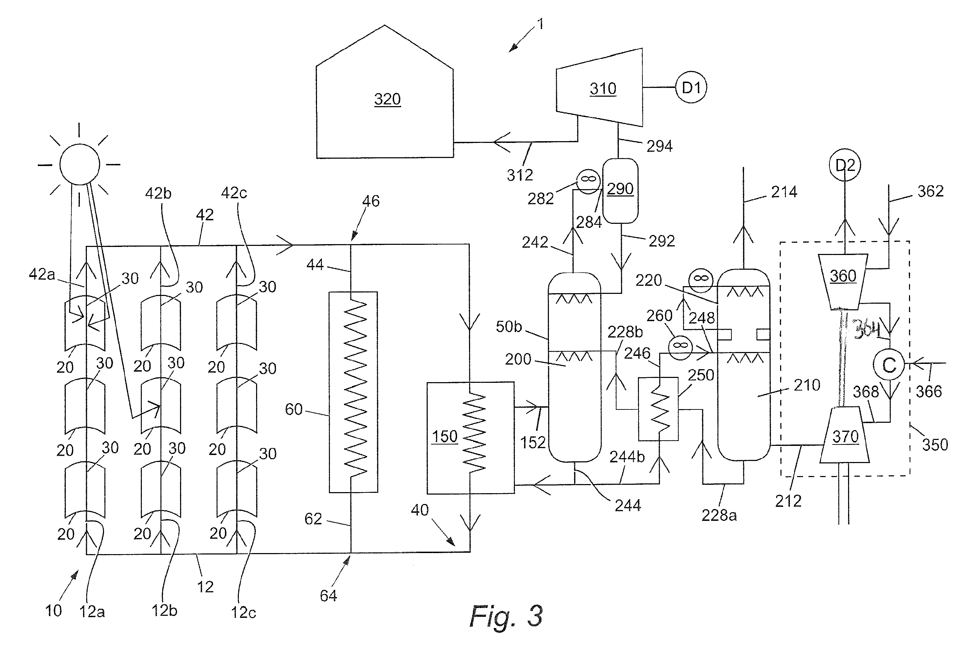

Figure 3 is a diagrammatic scheme for an apparatus and method of regenerating a loaded sorbent according to a third embodiment. A CSP system 10 comprising concentrators 20, receivers 30 and first thermal transfer circuit 40 is disclosed. First thermal transfer circuit 40 comprises a first thermal transfer fluid stream 12, which is split into three parallel first thermal transfer fluid part streams 12a, 12b, 12c. Each first thermal transfer fluid part stream 12a, 12b, 12c is passed through three pairs of concentrators 20 and receivers 30 which capture solar thermal energy to provide three heated first thermal transfer fluid part streams 42a, 42b, 42c respectively. The three heated first thermal transfer fluid part streams 42a, 42b, 42c are then combined to provide heated first thermal transfer fluid stream 42. The first thermal transfer fluid is preferably selected from the group comprising: H₂O, liquid sodium, molten salt, natural or synthetic oil and air

The CSP system 10 shown in Figure 3 is a parabolic trough system comprising nine parabolic trough concentrators 20 each having an associated tubular receiver 30. Each parabolic trough concentrator 20 reflects and concentrates light from the sun onto a corresponding receiver 30. A first thermal transfer fluid part stream 12a, 12b, 12c is carried within each receiver and is heated by the solar thermal energy captured in each receiver 30.

The present invention is not limited to such a CSP system comprising an array of parabolic trough concentrators 20 and tubular receivers 30. Alternative arrays comprising a plurality e.g. two, four, five or more parallel first thermal transfer fluid part streams are encompassed together with associated concentrators and receptors, which are not limited to trough and tube systems and may be linear Fresnel reflector arrays, solar tower, or parabolic reflector systems as discussed above. Such systems may comprise a plurality of concentrators and/or receivers in each first thermal transfer fluid part stream.

A thermal storage system 60 is provided in first thermal transfer fluid circuit 40. This operates in an identical manner to the thermal storage system 60 shown in Figure 1.

The heated first thermal transfer fluid stream 42 is heat exchanged in first heat exchanger 150 against a second thermal transfer fluid stream 244, which in this embodiment is a sorbent stream, to provide a heated second thermal transfer fluid stream 152, which is a heated sorbent stream, and the first thermal transfer fluid stream 112. First heat exchanger 150 replaces the boiler-fired reboiler in conventional acid gas treatment systems.

The heated sorbent stream 152 is passed to a sorbent heat exchanger 50b, which can be a stripper column, where it is used to heat and thereby regenerate loaded sorbent stream 228b. This heating releases the captured one or more absorbate components as absorbate component stream 242. Absorbate component stream 242 is cooled by first cooler 282, which may be an air or water cooler, to provide cooled absorbate component stream 284. Cooled absorbate stream 284 may be a multi-phase stream comprising the one or more absorbate components, such as carbon dioxide, and any residual sorbent, such as an aqueous amine solution, which will have been condensed by first cooler 282. Cooled absorbate stream 284 is passed to a separation vessel 290, such as a gas/liquid separator known in the art. Separation vessel 290 provides a sorbent bottoms stream 292 which is passed back to the sorbent heat exchanger 50b, and a absorbate top stream 294 which is passed to a first compressor 310, powered by driver D1. First compressor 310 compresses the absorbate top stream 294 to provide a compressed absorbate stream 312, such as a compressed carbon dioxide stream, which is passed to storage tank 320 for storage. The storage tank 320 may be in the form of a conventional constructed vessel for the storage of a gaseous product but also includes storage in an oil reservoir, for instance an undersea reservoir. In this way, the method and apparatus described herein can be used in a carbon capture process, for instance by transporting the compressed carbon dioxide stream to an undersea oil reservoir. In addition, the compressed carbon dioxide may also be used in an enhanced oil recovery process, where it is injected into an oil reservoir to increase the amount of oil removed.

In a further embodiment (not shown), the compressed absorbate stream 312, which can be a compressed carbon dioxide stream, can be passed to a mineral carbonation zone. In this zone, an aqueous stream comprising dispersed silicate particles is passed to a mineral carbonation reactor where it is reacted with the compressed carbon dioxide stream to produce carbonate compounds. The carbonate compounds can then be used elsewhere or stored. This process is discussed in greater detail in WO 2004/037391.

Returning to the sorbent heat exchanger 50b, at least a part of (regenerated) sorbent stream 244, is passed to second heat exchanger 250 as sorbent part stream 244b, where it its heat exchanged against loaded sorbent bottoms stream 228a to pre-heat the loaded sorbent bottoms stream, providing loaded sorbent stream 228b and heat exchanged sorbent stream 246. Heat exchanged sorbent stream 246 is then cooled by second cooler 260, which can be an air or water cooler, to provide cooled sorbent stream 248. Cooled sorbent stream 248 is passed to solvent extraction reactor 220 where it is intimately contacted with the process stream 212 comprising one or more absorbate components. Loaded sorbent bottoms stream 228a can be removed from at or near the bottom of the solvent extraction reactor 220 and passed to the second heat exchanger 259.

In the embodiment of Figure 3, the process stream 212 is a flue gas stream from a gas turbine 350. Gas turbine 350 comprises a second compressor 360 driven by a driver D2 which compresses oxidant stream 362, such as an air stream or a gaseous stream enriched in oxygen compared to air, to provide a compressed oxidant stream 364. Compressed oxidant stream 364 is passed to a combustion chamber C where it is used to ignite a hydrocarbon fuel stream 366 to produce combusted stream 368. Energy is released when the compressed oxidant stream 364 and the hydrocarbon fuel stream 366 are ignited. Combusted stream 368 is passed to a turbine 370 which is used to drive a shaft 375. Shaft 375 can be used to drive an electrical generator to provide power or a refrigerant compressor or feed gas compressor for use in a LNG manufacturing facility. The flue gas from the turbine 370 is passed to the solvent extraction reactor 220 where the carbon dioxide can be removed as process stream 212.

A person skilled in the art will readily understand that the present invention may be modified in many ways without departing from the scope of the appended claims.

## Claims

1. A method of regenerating a loaded sorbent (200) to provide a sorbent component and an absorbate component, said method comprising at least the steps of:
(a) providing a loaded sorbent (200, 206, 228) comprising a sorbent and one or more absorbate components;
(b) providing a concentrated solar power system (10);
(c) collecting solar energy from the sun in the concentrated solar power system to provide captured solar thermal energy; and
(d) using at least a part of the captured solar thermal energy to heat the loaded sorbent (200, 206, 228) to provide a sorbent component (210, 238, 244) and one or more absorbate component streams (242).

2. A method of claim 1 wherein the concentrated solar power system (10) comprises one or more concentrators (20) and one or more receivers (30).

3. A method of claim 2 wherein step (c) comprises reflecting and concentrating the solar energy with the one or more concentrators (20) to heat one or more first thermal transfer fluid streams (12) in one or more receivers (30) to provide one or more heated first thermal transfer fluid streams (42).

4. A method of claim 3 wherein step (d) comprises heat exchanging at least one of the heated first thermal transfer fluid streams (42) with the loaded sorbent (200) to provide the first thermal transfer fluid stream (12), the sorbent component (210) and the absorbate component stream (242).

5. A method of claim 3 wherein step (d) further comprises heat exchanging at least one of the heated first thermal transfer fluid streams (42) against one or more second thermal transfer fluid streams (112, 244) to provide at least one first thermal transfer fluid stream (12) and one or more heated second thermal transfer fluid streams (142, 152).

6. A method of claim 5 wherein step (d) further comprises heat exchanging the heated second thermal transfer fluid stream (142, 152) against the loaded sorbent (200, 206, 228) to provide the second thermal transfer fluid stream (112, 244), the sorbent (238, 244) and the absorbate stream (242).

7. A method of claim 6 wherein the heated second thermal transfer fluid stream (152, 142) is a heated sorbent stream (152) and the second thermal transfer fluid stream (112, 244) is a sorbent stream (244).

8. A method of any of the proceeding claims wherein the loaded sorbent (200) is provided as a loaded sorbent stream (206, 228) and the sorbent is provided as a sorbent stream (238, 244).

9. A method of claim 8 further comprising the step of:
(e) providing a process stream (212) comprising one or more absorbate components; and
(f) treating the process stream (212) with the sorbent stream (238, 248) in a treatment system (220) to provide the loaded sorbent stream (206, 228) and a treated process stream (214).

10. A method as claimed in claim 9 wherein the one or more absorbate components comprises one or more of the group selected from: carbon dioxide, oxides of sulphur and hydrogen sulphide.

11. A method as claimed in claim 10 wherein the sorbent stream (238, 248) comprises primary, secondary and/or tertiary amines derived from alkanolamines, especially amines are derived from ethanolamine, especially monoethanol amine, diethanolamine, triethanolamine, diisopropanolamine and methyldiethanolamine or mixtures thereof; diglycolamines and sterically hindered amines.

12. A method according to any one of the preceding claims further comprising the step of:
(g) passing the absorbate stream (242) to a first compressor (310) to provide a compressed absorbate stream (312); and
(h) passing the compressed absorbate stream (312) to a storage vessel (320).

13. A method according to claims 1 to 6 wherein the sorbent (210) is selected from the group comprising: a zeolite and a metal-organic framework.

14. A method according to any one of the preceding claims wherein the one or both of the first and second thermal transfer fluids are selected from the group comprising: H₂O, liquid sodium, molten salt, natural or synthetic oil and air.

15. An apparatus (1) for regenerating a loaded sorbent (200) to provide a sorbent component and an absorbate component, said apparatus (1) comprising at least:
a concentrated solar power system (10) comprising: one or more concentrators (20) to reflect and concentrate sunlight onto one or more receivers (30) and one or more receivers (30) to capture solar thermal energy in a first thermal transfer fluid stream (12) to provide a heated first thermal transfer fluid stream (42); and
a sorbent heat exchanger (50, 50a, 50b) to generate a sorbent component (210, 238, 244) and an absorbate component stream (242) using at least part of the captured solar thermal energy.

16. An apparatus according to claim 15 wherein the sorbent heat exchanger (50) heat exchanges the heated first thermal transfer fluid stream (42) against the loaded sorbent (200) and further provides a first thermal transfer fluid stream (12) to the receiver (30).

17. An apparatus according to claim 15 further comprising:
a first heat exchanger (150) to heat exchange the heated first thermal transfer fluid stream (42) against a second thermal transfer fluid stream (112, 244) to provide a first thermal transfer fluid stream (12) and a heated second thermal transfer fluid stream (142, 152), and
the sorbent heat exchanger (50a, 50b) heat exchanges the heated second thermal transfer fluid stream (142, 152) against the loaded sorbent (200, 206, 228) and further provides a second thermal transfer fluid stream (112, 244) to the first heat exchanger (150).
